(19) Europäisches Patentamt
European Patent Office
Office européen des brevets

(11) Veröffentlichungsnummer: **0 632 161 A1**

# (12) EUROPÄISCHE PATENTANMELDUNG

(21) Anmeldenummer: **94109394.0**

(22) Anmeldetag: **17.06.94**

(51) Int. Cl.[6]: **D21H 19/40**, C09C 1/42, C09D 17/00, D21H 17/69

(30) Priorität: **26.06.93 DE 4321376**

(43) Veröffentlichungstag der Anmeldung: **04.01.95 Patentblatt 95/01**

(84) Benannte Vertragsstaaten: **AT BE CH DE DK FR GB IT LI NL SE**

(71) Anmelder: **HOECHST AKTIENGESELLSCHAFT**
**Brüningstrasse 50**
**D-65929 Frankfurt am Main (DE)**

(72) Erfinder: **Horn, Ute**
**Ostring 19**
**D-65599 Dornburg (DE)**
Erfinder: **Dessauer, Guido, Prof. Dr.**
**Martelsgraben 2**
**D-82327 Tutzing (DE)**

## (54) Wässrige Feindispersion eines organophilen Schichtsilikates.

(57) Die vorliegende Erfindung betrifft eine wäßrige Feindispersion eines organophilen Schichtsilikats, bestehend im wesentlichen aus einem kationenaustauschfähigen Schichtsilikat und einem damit umgesetzten quartären organischen Oniumsalz, die dadurch gekennzeichnet ist, daß sie 3 bis 30 Gew.-%, bezogen auf das organophile Schichtsilikat, eines wasserlöslichen, natürlichen Polymeren und/oder dessen Derivat enthält.

EP 0 632 161 A1

In EP-A-0 542 215 wird eine wäßrige Feindispersion eines organophilen Schichtsilikates beschrieben, die aus einem kationenaustauschfähigen Schichtsilikat und einem damit umgesetzten quartären organischen Oniumsalz besteht und 3 bis 30 Gew.-%, bezogen auf das organophile Schichtsilikat, Polyvinylalkohol enthält. Diese Feindispersion eignet sich als Streichmasse für Papier und Karton sowie als Gleitmittelzusatz für konventionelle Streichmassen. Zur Herstellung werden neben dem Präzipitat, worunter das organophile Schichtsilikat nach mechanischem Abtrennen des Wassers verstanden wird, auch Polyvinylalkohole eingesetzt. In einer bevorzugten Ausführungsform des Herstellungsverfahrens werden sowohl Präzipitat und Polyvinylalkohol bei einer Temperatur im Bereich zwischen 90 und 98 °C unter Rühren mit hohen Scherkräften in ein wäßriges Medium eingebracht. Die Mischung wird so lange gerührt bis der Polyvinylalkohol vollständig gelöst ist und bis die gewünschte Feindispersität des Präzipitats mit dem interlaminar gebundenen Wasser noch erhalten wird.

Obwohl der Einsatz von Polyvinylalkohol aus drucktechnischer Sicht durchaus gute Ergebnisse liefert, beinhaltet das obengenannte Herstellungsverfahren verschieden Nachteile. So hat es sich gezeigt, daß das zur Herstellung erforderliche Erwärmen und teilweise lange Rühren, vor allem unter hohen Scherkräften, Verfahrensmaßnahmen darstellen, die es weitgehend zu vermeiden gilt.

Aufgabe der vorliegenden Erfindung ist es eine wäßrige Feindispersion zur Verfügung zu stellen, die zu den in EP-A-0 542 215 genannten Feindispersionen vergleichbare Ergebnisse liefert, bei dessen Herstellungsverfahren, die vorstehend genannten Nachteile nicht notwendigerweise in Kauf genommen werden müssen.

Überraschenderweise hat sich gezeigt, daß dies durch den Einsatz von wasserlöslichen, natürlichen Polymeren anstelle des Polyvinylalkohols erreicht werden kann.

Gegenstand der Erfindung ist eine wäßrige Feindispersion eines organophilen Schichtsilikats, bestehend im wesentlichen aus einem kationenaustauschfähigen Schichtsilikat und einem damit umgesetzten quartären organischen Oniumsalz, die dadurch gekennzeichnet ist, daß sie 3 bis 30 Gew.-%, bezogen auf das organophile Schichtsilikat, eines wasserlöslichen, natürlichen Polymeren und/oder dessen Derivat enthält.

Ebenfalls Gegenstand der Erfindung ist ein Verfahren zur Herstellung einer Feindispersion eines organophilen Schichtsilikates in einem wäßrigen Medium, ausgehend von einem kationenaustauschfähigem Schichtsilikat und einem damit umgesetzten quartären organischem Oniumsalz, das dadurch gekennzeichnet ist, daß das abgepresste Umsetzungsprodukt aus Schichtsilikat und Oniumsalz in eine wäßrige Lösung eines wasserlöslichen, natürlichen Polymeren und/oder dessen Derivat eingerührt wird oder das Umsetzungsprodukt aus Schichtsilikat und Oniumsalz und das wasserlösliche natürliche Polymer und/oder dessen Derivat gleichzeitig in das wäßrige Medium eingerührt werden.

Diese organophilen Schichtsilikate werden nach an sich bekannten Methoden erhalten, wie sie auch in dem Artikel von Prof. Dr. A. Weiss, Angew. Chem. Jhrg. 75, Nr. 2, 113-148 (1963) mit dem Titel "Organische Derivate der glimmerartigen Schichtsilikate" und in dem N.L. Rheologiehandbuch der National Lead Inc. Industries, New York 1983 mit dem Titel "Leitfaden für den Einsatz rheologischer Additive" (Deutsche Übersetzung herausgegeben von der N.L. Kronos Titan GmbH, Leverkusen) beschrieben jedoch nicht getrocknet sind.

Als kationenaustauschfähige Schichtsilikate kommen alle synthetischen oder natürlichen Schichtsilikate in Frage, die bis zu 12 bis 20 Gew.-% an Verunreinigungen in Form anderer Minerale, wie Feldspat enthalten können. Derartige Schichtsilikate sind beispielsweise Montmorillonit, Hectorit, Saporit, Sauconit, Beidellit, Nontronit und bevorzugt Bentonit.

Als quartäre organische Oniumsalze kommen insbesondere in Frage Verbindungen der Formel

$$\begin{array}{c} R^1 \\ | \\ R^4 - N^+ - R^2 \\ | \\ R^3 \end{array} \qquad\qquad A^-$$

wobei $R^1$ und $R^2$ $C_8$-$C_{22}$-Alkyl, $C_8$-$C_{22}$-Alkenyl oder Benzyl und $R^3$ und $R^4$ $C_1$-$C_4$-Alkyl oder $C_1$-$C_4$-Hydroxyalkyl und $A^-$ ein Anion, bevorzugt Chlorid, bedeuten. Besonders bevorzugt sind die Verbindungen Dimethyldistearylammoniumchlorid und Benzyldimethylstearylammoniumchlorid. Wenn die austauschfähigen Kationen des Schichtsilikats gegen das quartäre organische Oniumion ausgetauscht sind, wird Wasser

entfernt. Dies geschieht nach den üblichen Verfahren der Trenntechnik, z.B. durch Filtration oder Abpressen. Das nach dem Abtrennen von Wasser anfallende Präzipitat besteht zu ca. 70 bis 80 Gew.-% aus Wasser. Unter dem Begriff Präzipitat wird das organophile Schichtsilikat nach dem Abtrennen des Wassers verstanden. Bei dem erfindungsgemäßen Verfahren wird bevorzugt das Präzipitat zur Herstellung der wäßrigen Feindispersion eingesetzt.

Für die erfindungsgemäße wäßrige Feindispersion kommen als wasserlösliche, natürliche Polymere und/oder deren Derivate bevorzugt in Frage:

1. Wasserlösliche Celluloseether:

Die Viskositätsgrenzen dieser Celluloseether liegen üblicherweise bei 10 bis 500 000, insbesondere 20 bis 150 000 mPa•s (gemessen als 2 %ige wäßrige Lösung mit Höppler-Kugelfall-Viskosimeter bei 20 °C in destilliertem Wasser). Das mittlere Molekulargewicht liegt üblicherweise zwischen 5 000 und 500 000. Beispielhaft seien genannt: Methylcellulose, Methylhydroxyethylcellulose, Methylhydroxypropylcellulose, Hydroxyethylcellulose, Hydroxyethylhydroxypropylcellulose, Carboxymethylcellulose oder Carboxymethylhydroxycellulose. Bevorzugt werden Hydroxyethylcellulose, Methylhydroxyethylcellulose und Natriumcarboxymethylcellulose.

Die in der Praxis wichtigsten Celluloseether werden in Tabelle I mit ihren Veretherungsdaten aufgeführt. Der durchschnittliche Substitutionsgrad (DS) gibt die durchschnittliche Anzahl der Alkylgruppen (hier: Methyl, Ethyl und Propyl) pro Anhydroglucoseeinheit an. Der molare Substitutionsgrad (MS) gibt die durchschnittliche Anzahl an Hydroxyalkylengruppen (hier: Ethyl und Propyl) pro Anhydroglucoseeinheit an.

Bei der in Tabelle I aufgeführten Alkoxy-hydroxypropylhydroxyethylcellulose besteht die Alkoxygruppe aus 2 bis 8 C-Atomen, die geradkettig oder verzweigt miteinander verknüpft sein können und 0,05 bis 50 Gew.-%, bezogen auf das Gewicht des substituierten Celluloseethers, ausmachen.

Tabelle I: Wasserlösliche Celluloseether

| | DS | | MS |
|---|---|---|---|
| Methylcellulose | 1,4 - 2,2 | | |
| Methylhydroxyethylcellulose | 0,5 - 0,7 | | 0,05 - 0,5 |
| Methylhydroxypropylcellulose | 0,5 - 0,7 | | 0,1 - 1,0 |
| Hydroxyethylcellulose | - | | 0,5 - 0,7 |
| Hydroxyethylhydroxypropyl-cellulose | | MS HE: | 0,9 - 1,2 |
| | | MS HP: | 0,6 - 0,9 |
| Hydroxypropylcellulose | - | | 2,0 - 3,5 |
| Ethylhydroxyethylcellulose | 0,7 - 1,2 | | 0,8 - 2,7 |
| Carboxymethylcellulose-Na | 0,5 - 1,5 | | - |
| Carboxymethylhydroxyethyl-cellulose | 0,3 - 0,6 | | 0,3 - 2,3 |
| Alkoxy-hydroxypropyl-hydroxy-ethylcellulose | - | | 1,5 - 3,5 |
| | DS $OCH_3$ | | MS |
| Carboxymethylierte Methyl-hydroxyethyl- oder | 1,3 - 2,0 | | 0,5 - 0,5 |
| Methylhydroxypropylcellulose | 1,3 - 2,2 | | 0,1 - 1,0 |

2. Stärkeether

Die Kenndaten von bevorzugt verwendeten Stärkeether sind in Tabelle II aufgeführt.

Tabelle II

| Stärkeether | MS | DS | Viskosität* gem. als 2 %ige wässr. Lösung |
|---|---|---|---|
| Hydroxypropylstärke | 0,1 - 0,8 | - | 5 - 100 |
| Carboxymethylstärke | - | 0,1 - 0,8 | 5 - 100 |
| Hydroxypropylcarboxymethylstärke | 0,1 - 0,8 | 0,1 - 0,5 | 5 - 500 |

* Messung mit Höppler-Kugelfallviskosimeter bei 20 °C in dest. Wasser.

3. Guar Gum Derivate

In der nachfolgenden Tabelle III sind die bevorzugten Guar Gum Derivate aufgeführt.

Tabelle III

| | |
|---|---|
| Guar Endospermmehl (natürliches Galaktomannan) Viskosität (1 % in Wasser): (gem. mit Brookfield RVT, 25 °C, 20 UpM) | 100 - 20 000 mPa•s |
| Carboxymethylguar Viskosität (3 % in Wasser): | 100 - 20 000 mPa•s |
| Hydroxypropylguar Viskosität (1 % in Wasser): | 100 - 10 000 mPa•s |
| Carboxymethylhydroxypropylguar Viskosität (1 % in Wasser): | 100 - 20 000 mPa•s |
| Kationisierter Guar (quarternäre Substitution DS ca. 0,13) Viskosität (1 % in Wasser): | 100 - 20 000 mPa•s |

4. Xanthan Gum Derivate

Bei diesen Verbindungen handelt es sich um anionische Polysaccharide, die durch Fermentation und Extraktion aus Xanthimonas campestris hergestellt werden. Die Viskosität beträgt 100 - 10 000 mPa.s (gemessen mit Brookfield RVT, 25 °C, 20 UpM, 1 %ige wäßrige Lösung).

5. Alginate

Bezeichnung für die Salze und Ester der Alginsäure. Vorzugsweise werden niedrigviskose Ammonium- oder Natriumsalze der Alginsäure verwendet. Üblicherweise werden die Alginate zusammen mit Celluloseethern und/oder Stärkeestern eingesetzt.

Bei dem erfindungsgemäßen Verfahren wird das wasserlösliche, natürliche Polymer und/oder dessen Derivat unter Rühren in ein gegebenenfalls erwärmtes wäßriges Medium eingebracht und die Mischung bei einer Temperatur bis zu 50 °C, bevorzugt im Bereich von 20 °C bis 50 °C, so lange gerührt bis eine vollständige Lösung eingetreten ist. Besonders bevorzugt wird das wasserlösliche, natürliche Polymer und/oder dessen Derivat bei einer Temperatur zwischen 30 °C und 45 °C unter Rühren eingebracht. Weitere geeignete Bestandteile des wäßrigen Mediums sind wassermischbare Flüssigkeiten, z.B. Entschäumer und/oder Tenside. Das wäßrige Medium besteht bevorzugt aus Wasser ohne Zusatz an wassermischbaren Flüssigkeiten.

Ebenfalls unter Rühren wird in die Lösung das Präzipitat eingebracht, wobei die Temperatur der Dispersion in dem vorstehend genannten Temperaturbereich liegt. Es ist besonders vorteilhaft, wenn das Rühren unter hohen Scherkräften erfolgt. Die Zugabe des Präzipitats zur Polymer-Lösung erfolgt nach bekannten Methoden, im einfachsten Fall durch bloße Zugabe. Der Schervorgang dauert so lange an, bis die gewünschte Feindispersität erreicht ist (Verfahren A).

Es ist ebenfalls möglich das wasserlösliche, natürliche Polymer und/oder eines seiner Derivate gleichzeitig mit dem Präzipitat in ein gegebenenfalls erwärmtes wäßriges Medium unter Rühren, vorzugsweise mit hohen Scherkräften, einzubringen und so lange zu rühren, bis die gewünschte Feindispersität erreicht ist (Verfahren B). Das gleichzeitige Einbringen erfolgt ebenfalls nach bekannten Maßnahmen, im einfachsten Fall durch bloße Zugabe.

Das Dispergieren des Präzipitates erfolgt nach an sich bekannten Methoden. Je nach der Korngröße der vorliegenden Teilchen ist es angebracht, das Dispergieren des Präzipitates in der Lösung zunächst mit einem normalen Flügelrührer durchzuführen und anschließend die Feindispergierung durchzuführen. Das Feindispergieren des Präzipitates erfolgt mit geeigneten Vorrichtungen, wie einer Kolloidmühle, dem Ultraturrax (Hersteller: Jahnke und Kunkel) oder einem "Caddy-Mill"-Rührer,. In den erfindungsgemäßen Feindispersionen liegen die organophilen Schichtsilikate in einer mittleren Korngröße von unterhalb 20 µm, bevorzugt zwischen 5 und 0,5 µm vor.

Die erfindungsgemäßen wäßrigen Feindispersionen besitzen in der Regel einen Gesamtfeststoffgehalt von 12 bis 23 Gew.-%, bezogen auf die wasserfreie Feindispersion. Der Gehalt an wasserlöslichem, natürlichen Polymer und/oder dessen Derivat in der wäßrigen Feindispersion liegt zwischen 3 bis 30 Gew.-%, bevorzugt zwischen 12 bis 17 Gew.-%, bezogen auf das wasserfreie organophile Schichtsilikat.

Die erfindungsgemäßen Feindispersionen können direkt zum Beschichten von Papier und Karton eingesetzt werden, wobei es empfehlenswert ist, die hergestellten Feindispersionen durch bekannte Maßnahmen zu konservieren. Die Konservierung kann durch Zugabe geeigneter Desinfektionsmittel, wie Wasserstoffperoxid oder quartären Ammoniumsalzen mit bakteriziden Eigenschaften erfolgen. Den erfindungsgemäßen Feindispersionen können vor dem Beschichten dem Fachmann bekannte optische Aufheller, bevorzugt kationische oder wenig ionogene optische Aufheller, zugesetzt werden, um den in wäßrigen Strichen auftretenden Gelbstich zu unterdrücken.

Die erfindungsgemäßen Feindispersionen besitzen auch eine hohe Stabilität und Lagerfähigkeit und sind zur Herstellung von Streichmassen für Papier und Karton, insbesondere pigmenthaltigen Streichmassen, die dann ebenfalls eine gute Stabilität und Lagerfähigkeit besitzen, geeignet.

Die erfindungsgemäßen Feindispersionen eignen sich sowohl zum einseitigen als auch zum beidseitigen Beschichten von Papier und Karton. Sie eignen sich zum Beschichten aller Arten von Papieren, wie sie beim Tiefdruck, Rollenoffsetdruck, Bogenoffsetdruck und Hochdruck benötigt werden. Besonders geeignet sind sie zum Beschichten von Papier mit geringem Gewicht, wie LWC- oder LLWC-Papieren. Das Beschichten erfolgt mit Hilfe geeigneter Vorrichtungen, wie Luftbürsten-Streichmaschinen, "Gravur-Coater", "Blade Coater", Filmpressen oder Leimpressen, wobei nach bekannten Verfahren gearbeitet wird.

Aus wirtschaftlichen Gründen ist man bestrebt, bei Druckerzeugnissen mit hoher Auflage, beispielsweise bei Zeitschriften oder Versandkatalogen, Dünndruckpapiere zu verwenden. Hierbei ergeben sich aber Probleme hinsichtlich der Opazität, d.h. es kommt beim Drucken zu einem störenden Durchscheinen des Druckes auf die andere Seite des Papiers. Zur Verhinderung dieses Effektes werden die nach dem erfindungsgemäßen Verfahren hergestellten wäßrigen Feindispersionen auf das Papier aufgetragen. Je nach Wahl des Auftragsystems und der gewählten Papiersorte wird die wäßrige Feindispersion zu geringeren Feststoffgehalten verdünnt. So hat es sich gezeigt, daß es von Vorteil ist, bei der Verwendung von Leimpressen die Feindispersion auf einen Gesamtfeststoffgehalt im Bereich zwischen 7 und 9 Gew.-%, bezogen auf die wasserfreie Feindispersion einzustellen. Bei der Verwendung von Filmpresen ist es von Vorteil, die Feindispersion auf einem Gesamtfeststoffgehalt im Bereich von 19 bis 22 Gew.-%, bezogen auf die wasserfreie Feindispersion, einzustellen.

Es hat sich gezeigt, daß die Feindispersionen auch als Zusatz für pigmentierte Streichmassen konventioneller Art in einer Größenordnung von 0,3 bis 15 Gew.-%, bevorzugt 1 bis 2,5 Gew.-% bezogen auf den Gesamttrockengehalt der Streichmasse, verwendet werden können, wobei sie im Austausch für das als Gleitmittel verwendete Calciumstearat eingesetzt werden. Bevorzugt werden kationische Streichmassen.

Neben dem Verdünnen der Feindispersionen besteht auch die Möglichkeit, die Feindispersionen durch geeignete Maßnahmen, wie Vakuumdestillation aufzukonzentrieren und in dieser konzentrierten Form zum Beschichten von Papier und Karton zu verwenden. Die durch Aufkonzentrierung hergestellten erfindungsgemäßen Feindispersionen besitzen vorzugsweise einen Gesamtfeststoffgehalt von 20 bis 40 Gew.-%, bezogen auf die wasserfreie Feindispersion. Es hat sich gezeigt, daß diese aufkonzentrierten Feindispersionen auch als Zusatz für pigmentierte Streichmassen kationischer oder konventioneller Art in einer Größenordnung von 0,3 bis 15 Gew.-%, bezogen auf den Gesamttrockengehalt verwendet werden können, wobei sie im Austausch für das als Gleitmittel verwendete Calciumstearat eingesetzt werden.

Die mit den erfindungsgemäßen Feindispersionen bestrichenen Papiere und Kartons werden in einem anschließenden Arbeitsgang satiniert, wobei die Satinage gegebenenfallsmit gekühlten Walzen erfolgt.

Die Vorteile der erfindungsgemäßen wäßrigen Feindisperion bestehen darin, daß zur Herstellung der wäßrigen Feindispersionen auf das bisher übliche starke Erwärmen der Lösung verziechtet werden kann. Bei den erfindungsgemäßen Feindispersionen liegt die Strichauftragsmenge vorzugsweise in einem Bereich von 1,0 bis 2,5, bevorzugt 1,4 bis 2,1 $g/m^2$ auf jeder Seite.

Die Vorteile, die mit den erfindungsgemäßen Feindispersionen auf Druckgegenstände erzielt werden, lassen sich wie folgt darstellen: volle Toluoldichte, Reduzierung des Durchschlagens und Durchscheinens der Druckfarbe, Erhöhung des Farbstandes und der Farbtiefe, Verbesserung der Farbannahme, Anstieg des Druckglanzes und Reduzierung der "missing-dots". Beim Karton, der oftmals nach dem Bedrucken überlackiert wird, verringert sich durch die Beschichtung mit dem erfindungsgemäßen Mittel der Lackverbrauch, dabei kann der Auftrag der erfindungsgemäßen Feindispersion direkt auf den Karton oder auf einen oder mehrere pirmentierte vorstriche erfolgen.

Aufgrund ihrer oleophilen Oberflächeneigenschaften lassen sich die erfindungsgemäßen Feindispersionen bevorzugt beim Tiefdruck und Rollenoffset-Druck einsetzen.

Allgemeine Vorschrift zur Herstellung der Feindispersion

Verfahren A

Der wasserlösliche Celluloseether wird in die errechnete Menge wäßrigen Mediums unter Rühren bei 30 °C mit einem Flügelrührer eingestreut. Zur klaren Lösung wird bei dieser Temperatur das Präzipitat sukzessive unter Rühren zugesetzt. Anschließend wird unter starkem Scheren mit dem Ultraturax (Hersteller: Jahnke und Kunkel) bis zum Erhalt einer kolloiden Feindispersion homogenisiert. Die Feindispersität wird mit dem Malvern 2600 C (Hersteller: Malvern, England; Typ. Laserlichtbeugungsgerät) bestimmt.

Verfahren B

Wasserlöslicher Celluloseether und Präzipitat werden gemeinsam in das vorgelegte wäßrige Medium unter Rühren mit einem Flügelrührer eingetragen. Danach wird die Dispersion, analog Verfahren A, geschert, bis eine kolloidale Dispersion vorliegt. Die Feindispersität wird wie in Verfahren A bestimmt.

**Tabelle V: (Angaben in Gew.-%)**

| Beispiel | 1 | 2 | 3 | 4 |
|---|---|---|---|---|
| Verfahren | A | A | A | A |
| Präzipitat[1)] | 50 | 65 | 55 | 59 |
| HEC[2)] | | 2,21 | | 0,75 |
| MHEC[3)] | 1 | | | |
| Na-CMC[4)] | 1 | | | |
| Stärkeether[5)] | | | 1,87 | 1.25 |

| Beispiel | 1 | 2 | 3 | 4 |
|---|---|---|---|---|
| Konservierungsmittel[6)] | 0,1 | 0,1 | 0,1 | 0,1 |
| Optischer Aufheller[7)] | 0,03 | 0,03 | 0,03 | 0,03 |
| Wasser | ad 100 | ad 100 | ad 100 | ad 100 |

1) hergestellt aus Na-Bentonit und Distearyldimethylammoniumchlorid, Feststoffgehalt 20 Gew.-%

2) Hydroxyethylcelluloseether, Granulat, normal verethert (MS= 0,5-0,7), Viskosität: 20 mPa•s (gemessen mit Höppler-Viskosimeter, 2 %ige wäßrige Lösung, 20°C)

3) Methylhydroxyethylcelluloseether, Granulat, normal verethert (DS=0,5-0,7), Viskosität: 300 mPa•s (gemessen mit Höppler-Viskosimeter, 2 %ige wäßrige Lösung, 20°C)

4) Carboxymethylcelluloseether, Granulat, normal verethert (DS=0,5-0,7), Viskosität: 300 mPa•s (gemessen mit Höppler-Viskosimeter, 2 %ige wäßrige Lösung, 20°C)

5) hier: ®Solvitose H4

6) hier: ®Mergal K9N (Hersteller: Hoechst AG)

7) hier: ®Blancophor flüssig (Hersteller: Bayer AG)

Beschichtung, Satinage und Probedruck

Mit der Feindispersion des Beispiels 2 wird ein SC-Papier (ca. 10 Gew.-% Zellstoff, ca. 21 Gew.-% Füllstoff) beschichtet. Das Beschichten erfolgt mit Hilfe eines "Gravur-Coaters" ("Multi-Coater" mit gegenläufiger Gravurwalze, Aufnahme an Beschichtungsmasse: ca. 33 ml/m$^2$). Das Trägerpapier wird beidseitig beschichtet. An das Auftragswerk schließt sich unmittelbar die

Trocknung des beschichteten Papiers an. Vor dem Probedruck wird das Papier satiniert (Tabelle VI).

Tabelle VI:

| Versuch Nr. | Geschwindigkeit [m/min] | Liniendruck [KN/m] | Walzentemperatur [°C] |
|---|---|---|---|
| A0 | 200 | 300 | 90 |
| A1/A2 | 200 | 225 | 45 |
| A3/A4 | 200 | 225 | 45 |
| A5/A6 | 200 | 225 | 45 |

Das satinierte SC-Rohpapier (A0) besitzt ein Gewicht von 40 g/m$^2$ Tabelle VII nennt die durchgeführten Beschichtungen (Striche A1 /A2, A3/A4, A5/A6).

| Versuch-Nr. (Strich) | Papierlänge [m] | Auftragsgewicht [g/m$^2$] | | Papiergewicht [g/m$^2$] |
|---|---|---|---|---|
| | | Vorderseite (außen) | Rückseite (innen) | |
| A0 | ca. 12 000 | - | - | 40 |
| A1 | ca. 12 000 | 2 | | 44 |
| A2 | ca. 12 000 | | 2 | |
| A3 | ca. 12 000 | 2 | | 42 |
| A4 | ca. 12 000 | | - | |
| A5 | ca. 12 000 | 1 | | 42 |
| A6 | ca. 12 000 | | 1 | |

Bei dem Probedruck werden die in Tabelle VIII aufgeführten Ergebnisse erzielt.

Tabelle VIII

| Strich | Papiergewicht [g/m²] | Weiße | Opazität | Luftdurchlässigkeit | Beck-Glätte | | Glanz | | | | Druckglanz | |
|---|---|---|---|---|---|---|---|---|---|---|---|---|
| | | | | | außen | innen | außen | | innen | | außen | innen |
| | | | | | | | längs | quer | längs | quer | | |
| A0 | 40 | 64,3 | 87,3 | 42 | 895 | 852 | 25,4 | 22,3 | 26,1 | 21,4 | 61,1 | 32,8 |
| A1/A2 | 44 | 63,9 | 88,2 | 9 | 857 | 833 | 37,3 | 30,6 | 35,8 | 30,1 | 60,3 | 31,3 |
| A3/A4 | 42 | 65,7 | 89,4 | 20 | 648 | 345 | 39,3 | 24,5 | 14,7 | 13,0 | 59,3 | 19,1 |
| A5/A6 | 42 | 66,1 | 89,9 | 28 | 602 | 446 | 26,4 | 21,6 | 20,7 | 18,1 | 59,9 | 23,3 |

## Patentansprüche

1. Wäßrige Feindispersion eines organophilen Schichtsilikates, bestehend im wesentlichen aus einem kationenaustauschfähigen Schichtsilikat und einem damit umgesetzten quartären organischen Oniumsalz, dadurch gekennzeichnet, daß sie 3 bis 30 Gew.-%, bezogen auf das wasserfreie organophile

Schichtsilikat, eines wasserlöslichen, natürlichen Polymeren und/oder dessen Derivat enthält.

**2.** Wäßrige Feindispersion nach Anspruch 1, dadurch gekennzeichnet, daß das kationenaustauschfähige Schichtsilikat aus Montmorillonit, Hectorit, Saporit, Sauconit, Beidellit, Nontronit und/oder Bentonit, insbesondere aus Bentonit, besteht.

**3.** Wäßrige Feindispersion nach Anspruch 1 oder 2, dadurch gekennzeichnet, daß das quartäre organische Oniumsalz aus Verbindungen der Formel $(NR^1R^2R^3R^4)^+ A^-$ besteht, in denen
$R^1$ und $R^2$ $C_8$-$C_{22}$-Alkyl, $C_8$-$C_{22}$-Alkenyl oder Benzyl,
$R^3$ und $R^4$ $C_1$-$C_4$-Alkyl oder $C_1$-$C_4$-Hydroxyalkyl und
$A^-$ ein Anion bedeuten.

**4.** Wäßrige Feindispersion nach einem der Ansprüche 1 bis 3, dadurch gekennzeichnet, daß es sich bei dem wasserlöslichen, natürlichen Polymer und/oder dessen Derivat um einen Celluloseether, einen Stärkeether, ein Guar Gum Derivat, ein Xanthan Gum Derivat und/oder Alginat handelt.

**5.** Wäßrige Feindispersion nach Anspruch 4, dadurch gekennzeichnet, daß der wasserlösliche Celluloseether ein mittleres Molekulargewicht zwischen 5 000 und 500 000 und eine Viskosität zwischen 10 und 500 000, insbesondere 20 bis 150 000 mPa•s (gemessen als 2 %ige wäßrige Lösung mit Höppler-Kugelfall-Viskosimeter bei 20 °C in destilliertem Wasser) besitzt.

**6.** Wäßrige Feindispersion nach einem der Ansprüche 1 bis 5, dadurch gekennzeichnet, daß sie 12 bis 17 Gew.-% eines wasserlöslichen, natürlichen Polymeren und/oder dessen Derivat, bezogen auf das Gesamtgewicht des wasserfreien organophilen Schichtsilikats enthält.

**7.** Wäßrige Feindispersion nach einem der Ansprüche 1 bis 6, dadurch gekennzeichnet, daß die mittlere Korngröße des organophilen Schichtsilikates kleiner als 20 µm, bevorzugt 5 bis 0,5 µm ist.

**8.** Verfahren zur Herstellung einer Feindispersion eines organophilen Schichtsilikates in wäßrigem Medium, ausgehend von einem wasserhaltigen Präzipitat aus kationenaustauschfähigem Schichtsilikat und quartären organischem Oniumsalz, dadurch gekennzeichnet, daß das Präzipitat in eine klare wäßrige Lösung eines wasserlöslichen, natürlichen Polymeren und/oder dessen Derivat bei einer Temperatur bis zu 50 °C, bevorzugt im Bereich von 20 bis 50 °C eingerührt wird oder das Präzipitat und das wasserlösliche, natürliche Polymer und/oder dessen Derivat gleichzeitig in das wäßrige Medium bei einer Temperatur bis zu 50 °C, bevorzugt im Bereich von 20 bis 50 °C eingerührt werden.

**9.** Papier oder Karton, einseitig oder beidseitig bestrichen mit der wäßrigen Feindispersion nach einem der Ansprüche 1 bis 7.

**10.** Papier oder Karton nach Anspruch 9, dadurch gekennzeichnet, daß die Auftragsmenge gleich/kleiner als 2 $g/m^2$ ist.

**11.** Streichmasse für Papier oder Karton, enthaltend eine wäßrige Feindispersion nach einem der Ansprüche 1 bis 7.

**12.** Gleitmittelzusatz für kationische oder konventionelle Streichmassen, enthaltend eine wäßrige Feindispersion nach einem der Ansprüche 1 bis 7.

Europäisches Patentamt

# EUROPÄISCHER RECHERCHENBERICHT

Nummer der Anmeldung
EP 94 10 9394

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A,D | EP-A-0 542 215 (HOECHST AG)<br>* das ganze Dokument *<br>--- | 1-12 | D21H19/40<br>C09C1/42<br>C09D17/00 |
| A | EP-A-0 192 252 (SÜD-CHEMIE AG)<br>* das ganze Dokument *<br>----- | 1-12 | D21H17/69 |

RECHERCHIERTE SACHGEBIETE (Int.Cl.5)
D21H

Der vorliegende Recherchenbericht wurde für alle Patentansprüche erstellt

| Recherchenort | Abschlußdatum der Recherche | Prüfer |
|---|---|---|
| DEN HAAG | 15. September 1994 | Songy, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)